# EUROPEAN PATENT APPLICATION

(11) **EP 4 678 609 A1**
(43) Date of publication of application: **14.01.2026**
(21) Application number: 24767210.8
(22) Date of filing: 07.03.2024
(51) Int. Cl.: C03C 27/12, B60K 35/23, G02B 27/01

(54) **WINDSHIELD GLASS AND HEAD-UP DISPLAY SYSTEM**

(30) Priority: 08.03.2023 JP 2023035669
(71) Applicant: FUJIFILM Corporation, Tokyo 106-8620 (JP)
(72) Inventor: ANZAI, Akihiro, Minamiashigara-shi Kanagawa 250-0193 (JP)
(74) Representative: Klunker IP Patentanwälte PartG mbB
(86) International application number: PCT/JP2024/008725
(87) International publication number: WO 2024/185844

(57) **Abstract**

An object is to provide a windshield glass and a head-up display system, which have a high visible light transmittance and can improve brightness of a display image. The object is achieved by satisfying all of the following conditions: an interlayer film is provided between an inner glass plate and an outer glass plate; a reflective layer in which a metal layer is sandwiched between dielectric layers is provided on an air interface of the inner glass plate; a P-polarized light reflectivity at an incidence angle of 65° is 26% or more; a transmittance at an incidence angle of 0° is 70% or more; a refractive index of the metal layer is 0.1 or less; and in the dielectric layer, a layer in contact with the metal layer is not a metal oxide.

## Description

### BACKGROUND OF THE INVENTION

### 1. Field of the Invention

The present invention relates to a windshield glass having a reflective layer and a head-up display system using the windshield glass.

### 2. Description of the Related Art

Recently, it is known as a so-called head-up display or head-up display system for providing various pieces of information such as maps, traveling speed, and vehicle conditions to a driver or the like by projecting screen images on a windshield glass of a vehicle or other moving objects.

With the head-up display system, drivers or other subjects observe virtual images of screen images which are projected on the windshield glass and include the above-described various pieces of information. A virtual image formation position is positioned on the driver's field of the vehicle outer side of the windshield glass. The virtual image formation position is usually positioned at the driver's field more than 1,000 mm away from the windshield glass, and the outer side of the windshield glass. Therefore, the driver can obtain the above-described various pieces of information while looking at the outer side in the driver's field, without significantly moving his/her line of sight.

Accordingly, in a case of using the head-up display system, it is expected to drive more safely while obtaining various pieces of information.

The head-up display system can be configured to, for example, form the reflective layer on the windshield glass using a half-mirror film. In response to this, various half-mirror films that can be used in the head-up display system have been proposed.

For example, WO2016/058474A discloses a head-up display system including a reflective layer which can reflect a part of P-polarized light emitted as projection light, in which a metal layer and a dielectric layer are combined.

The windshield glass constituting the head-up display system is required to have high visible light transmittance, including a portion having a combiner such as the reflective layer for reflecting projection light.

However, in the method of WO2016/058474A, a P-polarized light reflectivity of the reflective layer is weak, and thus there is a problem in visibility of a display image (projection image).

### SUMMARY OF THE INVENTION

Here, in an in-vehicle head-up display system, it is necessary to improve the visibility of the head-up display screen image within a range in which the transmittance is equal to or higher than legal regulation, and a high reflectivity is required. In particular, red display indicating alert in the screen image content is required to have a high reflectivity in order to further improve visibility.

An object of the present invention is to provide a windshield glass and a head-up display system, which have a high visible light transmittance and can improve visibility of a display image.

In the present invention, by forming a metal layer and a dielectric layer suitable for a reflective layer provided in the windshield glass, the high visible light transmittance is provided, and the visibility of the display image is significantly improved. Specifically, the above-described object is achieved by the following means.
[1] A windshield glass comprising, in the following order:
   an outer glass plate;
   an interlayer film; and
   an inner glass plate,
   in which a reflective layer in which a metal layer is sandwiched between dielectric layers is provided on a surface of the inner glass plate opposite to the outer glass plate, and
   all of the following requirements (A) to (D) are satisfied,
      (A) a P-polarized light reflectivity at an incidence angle of 65° is 26% or more,
      (B) a transmittance at an incidence angle of 0° is 70% or more,
      (C) a refractive index of the metal layer is 0.1 or less, and
      (D) in the dielectric layer, a layer in contact with the metal layer is not a metal oxide.
[2] The windshield glass according to [1],
   in which the dielectric layer consists of two or more layers.
[3] The windshield glass according to [1] or [2],
   in which the refractive index of the metal layer is 0.05 or less.
[4] The windshield glass according to any one of [1] to [3],
   in which the metal layer contains silver.
[5] The windshield glass according to any one of [1] to [4],
   in which, in the dielectric layer, the layer in contact with the metal layer has oxygen barrier properties, and an oxygen permeability of the layer is 0.1 cm³/(m²·day·atm).
[6] The windshield glass according to any one of [1] to [5],
   in which at least one of the inner glass plate or the outer glass plate is green glass.
[7] The windshield glass according to any one of [1] to [6],
   in which, in the dielectric layer, the layer in contact with the metal layer has a larger area than the metal layer and covers an entire surface of the metal layer.
[8] A head-up display system comprising:
   the windshield glass according to any one of [1] to [7]; and
   a projector which emits projection light to the inner glass plate side of the windshield glass.
[9] The head-up display system according to [8],
   in which the projector emits P-polarized projection light.

According to the present invention, it is to provide a windshield glass and a head-up display system, which have a high visible light transmittance and can improve brightness, that is, visibility of a display image.

### BRIEF DESCRIPTION OF THE DRAWINGS

Fig. 1 is a schematic view showing an example of a windshield glass according to the embodiment of the present invention.
Fig. 2 is a schematic view showing an example of a head-up display including the windshield glass according to the embodiment of the present invention.

### DESCRIPTION OF THE PREFERRED EMBODIMENTS

Hereinafter, the windshield glass and the head-up display system according to embodiments of the present invention will be described in detail based on suitable embodiments shown in the accompanying drawings.

The drawings described below are exemplary for explaining the present invention, and the present invention is not limited to the drawings illustrated below.

In the following, "to" indicating the numerical range includes numerical values described on both sides. For example, in a case where ε₁ is a numerical value α₁ to a numerical value β₁, the range of ε₁ is a range including the numerical value α₁ and the numerical value β₁, and it is expressed as α₁ ≤ ε₁ ≤ β₁ in mathematical symbols.

Unless specified otherwise, the meaning of an angle such as "an angle represented by a specific numerical value", "parallel", "perpendicular", or "orthogonal" includes a case where an error range is generally allowable in the technical field.

In addition, "same" includes an error range generally tolerated in the art, and "entire surface" and the like also include error ranges generally tolerated in the art.

"light" means light of visible light and natural light (non-polarized light), unless otherwise specified. The visible light is light at a wavelength which is visible to the human eyes, among electromagnetic waves, and is normally light in a wavelength range of 380 to 780 nm. Invisible light refers to light in a wavelength range of less than 380 nm or more than 780 nm.

Although not limited thereto, among the visible light, light in a wavelength range of 420 to 490 nm is blue (B) light, light in a wavelength range of 495 to 570 nm is green (G) light, and light in a wavelength range of 620 to 750 nm is red (R) light.

"visible light transmittance" is a visible light transmittance of an A light source defined in Japanese Industrial Standards (JIS) R 3106.

That is, the transmittance is obtained by measuring the transmittance at each wavelength in a range of 380 nm to 780 nm with a spectrophotometer using the A light source, multiplying the wavelength-wise International Commission on Illumination (CIE) photopic spectral luminous efficiency function distribution and the pre-calculated weighting factors for each wavelength by the transmittance, and then performing a weighted average.

In a case of simply referring to "reflected light" or "transmitted light", the "reflected light" and "transmitted light" include meanings of "scattered light" and "diffracted light", respectively.

"P-polarized light" means polarized light that vibrates in a direction parallel to a surface into which light is incident. The incident surface means a surface that is perpendicular to a reflecting surface (such as a surface of windshield glass) and that includes incident rays and reflected rays. A vibration surface of an electric field vector of the P-polarized light is parallel to the incident surface.

"projection image" means an image based on projection of light from a projector to be used, which is not a scenery viewed from the driver's position such as the driver's field. The projection image is observed as a virtual image which is shown by an observer as the projection image is floated over a reflective layer of a windshield glass.
"screen image" means an image displayed on a drawing device of the projector or an image drawn on an intermediate image screen or the like by the drawing device. In contrast to a virtual image, the screen image is a real image.

Both the screen image and the projection image may be monochrome images, may be multicolor images with two or more colors, or may be full color images.

### [Windshield glass]

The windshield glass according to the embodiment of the present invention includes an outer glass plate, an interlayer film, an inner glass plate, and a reflective layer in this order. The reflective layer includes a metal layer and dielectric layers that sandwich the metal layer.

In the windshield glass according to the embodiment of the present invention, the reflective layer is provided on a surface of the inner glass plate opposite to the outer glass plate.

In the present invention, the windshield glass means common windows and windshields for vehicles such as automobiles including passenger cars, and trains, airplanes, ships, motorcycles, or vehicles such as playground equipment.

The windshield glass according to the embodiment of the present invention is preferably used as a windshield, a windshield glass, or the like for vehicles such as automobiles.

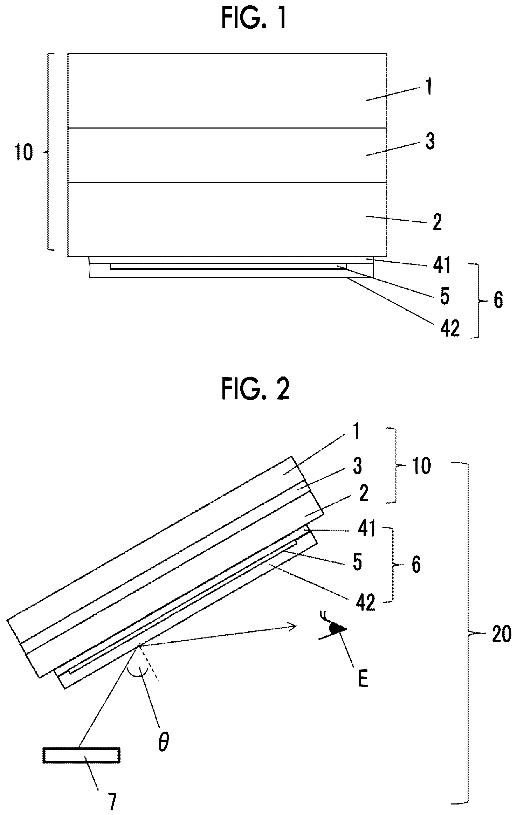

Fig. 1 conceptually shows an example of the windshield glass according to the embodiment of the present invention.

The windshield glass shown in Fig. 1 includes a windshield glass body 10 and a reflective layer 6.

The windshield glass body 10 includes an outer glass plate 1, an inner glass plate 2, and an interlayer film 3 sandwiched between the outer glass plate 1 and the inner glass plate 2, similarly to a common windshield glass for vehicles.

In addition, the reflective layer 6 includes a metal layer 5, and a dielectric layer 41 and a dielectric layer 42. In the windshield glass according to the embodiment of the present invention, the metal layer 5 is sandwiched between the dielectric layer 41 and the dielectric layer 42.

As described above, the reflective layer 6 is provided on a surface of the inner glass plate 2 opposite to the outer glass plate 1. That is, in the windshield glass according to the embodiment of the present invention, the reflective layer 6 is provided on an inside of a vehicle such as an automobile.

In a case where the windshield glass according to the embodiment of the present invention is used in a vehicle, the outer glass plate 1 and the inner glass plate 2 are often used as curved glass.

In this case, in a case where the inner glass plate 2 is set as the inside of the vehicle and the outer glass plate 1 is set as the outside of the vehicle, the inner glass plate 2 is disposed such that a convex surface side faces the outer glass plate 1, and the outer glass plate 1 is disposed such that a concave surface side faces the inner glass plate 2.

Therefore, in a case where the inner glass plate 2 and the outer glass plate 1 are curved glass, in the example shown in Fig. 1, the reflective layer 6 including the dielectric layer 41, the dielectric layer 42, and the metal layer 5 is disposed on the concave surface side of the inner glass plate 2.

In the windshield glass according to the embodiment of the present invention, the size of the dielectric layer 41, the dielectric layer 42, and the metal layer 5 is not limited, and may be set appropriately depending on the intended size of the reflective layer 6.

In the following description, in a case where it is not necessary to distinguish between the dielectric layer 41 and the dielectric layer 42, both are collectively referred to as a dielectric layer.

Here, the metal layer 5 is easily oxidized. Therefore, in the present invention, it is preferable that the dielectric layer acts as a protective film of the metal layer 5. Specifically, the area of the dielectric layer 42 on the side of the metal layer 5 opposite to the windshield glass body 10, preferably the area of the dielectric layer 41 and the area of the dielectric layer 42, is made larger than the area of the metal layer 5. In addition, the entire surface of the metal layer 5 is covered beyond an end part of the metal layer 5 by at least the dielectric layer 42, preferably the dielectric layer 41 and the dielectric layer 42, as shown in Fig. 1. In this manner, it is preferable that the dielectric layer acts as the protective film of the metal layer 5.

In particular, in a case where silver is used for the metal layer, since the silver is easily oxidized, it is preferable that the dielectric layer is formed to cover the entire surface of the metal layer as the protective film.

In a case where the dielectric layer is formed of a plurality of layers as described later, the entire surface of the metal layer 5 may be covered with all the layers or only a layer in contact with the metal layer 5.

In consideration of this point, in the windshield glass according to the embodiment of the present invention, it is preferable that the dielectric layer 42 on the side of the metal layer 5 opposite to the inner glass plate 2, preferably the dielectric layer 41 and the dielectric layer 42, have oxygen barrier properties. In a case where the dielectric layer is formed of a plurality of layers, it is preferable that at least a layer in contact with the metal layer 5 has oxygen barrier properties.

Specifically, in the dielectric layer, the layer having oxygen barrier properties has an oxygen permeability of preferably 0.1 cm³/(m²·day·atm) or less, and more preferably 0.01 cm³/(m²·day·atm) or less.

With such a configuration, the dielectric layer more suitably exhibits the action as the protective layer of the metal layer 5.

The oxygen permeability may be measured in accordance with a gas permeability test method based on JIS K 7126-2:2006. As a measuring device, an oxygen transmission rate measuring instrument OX-TRAN1_50 manufactured by MOCON, Inc. can be used. As an example of the measurement conditions, the measurement temperature may be set to 23°C and the humidity may be set to 50%.

A visible light transmittance of the windshield glass according to the embodiment of the present invention is not limited, but is preferably high. The visible light transmittance of the windshield glass is preferably 70% or more, more preferably more than 70%, still more preferably 75% or more, and particularly preferably 80% or more.

In addition, the windshield glass according to the embodiment of the present invention has a transmittance (visible light transmittance) of 70% or more at an incidence angle of 0°. The incidence angle of 0° is a transmittance in a case where light is incident from a normal direction of the windshield glass.

In a case where the transmittance at an incidence angle of 0° is less than 70%, there is a problem in that the windshield glass cannot be used for in-vehicle applications, and there is a problem in that the visibility is poor and the safety is poor.

It is preferable that the transmittance at an incidence angle of 0° is high. Specifically, the transmittance at an incidence angle of 0° is preferably more than 70%, more preferably 75% or more, and still more preferably 80% or more.

The visible light transmittance is measured at an incidence angle of 0° as described above.

It is preferable that the above-described visible light transmittance is satisfied at any position of the windshield glass, and it is particularly preferable that the above-described visible light transmittance is satisfied at a position where the reflective layer 6 is present. In the windshield glass according to the embodiment of the present invention, the metal layer 5 constituting the reflective layer 6 has a refractive index of 0.1 or less, preferably 0.05 or less, and has a high visible light transmittance. Therefore, in the windshield glass according to the embodiment of the present invention, even in a case where any glass generally used for the windshield glass is used as the outer glass plate 1 and the inner glass plate 2, the above-described visible light transmittance can be satisfied.

It is preferable that the windshield glass according to the embodiment of the present invention reflects linearly polarized light. In a case where the reflective layer is incorporated in the windshield glass and used as a combiner for a head-up display system, the projected image light is preferably P-polarized light, that is, linearly polarized light in order to reduce reflection on the surface of the windshield glass.

In addition, in the windshield glass according to the embodiment of the present invention, a P-polarized light reflectivity at an incidence angle of 65° is 26% or more. Accordingly, in the windshield glass (head-up display system) according to the embodiment of the present invention, the brightness, that is, the visibility of the display image (projection image (head-up display image)) can be increased.

The incidence angle is an angle formed by a normal line of an incident surface and incident light (optical axis of light). In the windshield glass according to the embodiment of the present invention, in Fig. 2, an angle θ formed by a normal line of the windshield glass (reflective layer), indicated by a broken line, and incidence ray is the incidence angle.

In a case where the P-polarized light reflectivity of the windshield glass at an incidence angle of 65° is less than 26%, there is a problem in that the visibility of the display image of the head-up display system is insufficient, a blue portion and a red portion of the display image are difficult to see during the daytime, and the like.

In the windshield glass according to the embodiment of the present invention, the P-polarized light reflectivity at an incidence angle of 65° is preferably 28% or more, and more preferably 30% or more.

In addition, in the windshield glass according to the embodiment of the present invention, basically, the P-polarized light reflectivity at an incidence angle of 65° is preferably high, but in consideration of the visible light transmittance in a region where the reflective layer is disposed, it is preferably 35% or less.

In the present invention, the P-polarized light reflectivity at an incidence angle of 65° may be measured according to Examples described later.

A shape of the windshield glass is not limited, and is appropriately determined according to a target on which the windshield glass is disposed.

Therefore, the windshield glass may be, for example, a flat surface or a three-dimensional shape having a curved surface such as a concave surface and a convex surface. In a windshield glass molded for an applicable vehicle, the upward direction during normal use, and surfaces becoming the observer side, the driver side, and the visible side such as the inside of the vehicle can be specified.

In the windshield glass according to the embodiment of the present invention, the reflective layer may be provided at a display unit (reflection unit of projection light) of the display image in the windshield glass.

The reflective layer may be provided on the entire surface of the windshield glass, or may be provided on a part of the windshield glass in a plane direction; but is preferably provided on a part of the windshield glass.

In a case where the reflective layer is provided in a part of the windshield glass, the reflective layer may be provided at any position of the windshield glass; but it is preferable that the reflective layer is provided at a position where a virtual image is easily recognized by an observer such as a driver in a case of being used in a head-up display system. For example, the position where the reflective layer is provided in the windshield glass may be determined from a relationship between the position of the driver's seat in the vehicle on which the head-up display system is mounted and the position where the projector is installed.

Hereinafter, the configuration components of the windshield glass according to the embodiment of the present invention will be described.

### <Reflective layer>

In the windshield glass according to the embodiment of the present invention, the reflective layer includes dielectric layers and a metal layer, and is configured to sandwich the metal layer with the dielectric layers.

It is preferable that the reflectivity of the reflective layer at an incidence angle of 0° is low because the transmittance of the windshield glass is increased. In addition, it is preferable that the reflectivity at an incidence angle of 65° is high because the visibility of the display image (projection image) is increased. In addition, since a phase of the reflective layer can be controlled by the refractive index and the film thickness of the metal layer and the dielectric layer, it is preferable that the metal layer and the dielectric layer are configured such that the P-polarized light reflection at the incidence angle of 65° is increased.

Although described later in detail, since the windshield glass according to the embodiment of the present invention includes, as the reflective layer, a reflective layer having a configuration in which the metal layer is sandwiched between the dielectric layers, a windshield glass having a high visible light transmittance and a high P-polarized light reflectivity is achieved.

The reflective layer may be provided on the surface of the inner glass plate by directly forming the dielectric layer, the metal layer, and the dielectric layer on the inner glass plate by a vapor phase deposition method, as in Examples described later. Alternatively, in the windshield glass according to the embodiment of the present invention, a separately produced reflective layer may be bonded to the inner glass plate by a known bonding unit such as an optical clear adhesive (OCA).

### <<Metal layer>>

In the windshield glass according to the embodiment of the present invention, the metal layer forming the reflective layer is not limited. That is, as the metal layer, a metal layer containing various metal materials can be used as long as it can reflect visible light.

Specifically, examples of a forming material of the metal layer include silver, aluminum, copper, gold, and an alloy containing one or more of these metals.

In the present invention, as the refractive index of the metal layer is lower, the P-polarized light reflectivity at an incidence angle of 65° is increased. Specifically, in the present invention, the metal layer has a refractive index of 0.1 or less at a wavelength of 550 nm. The refractive index of the metal layer at a wavelength of 550 nm is preferably 0.05 or less and more preferably 0.03 or less. In the present invention, unless otherwise specified, the refractive index is a refractive index at a wavelength of 550 nm.

In this regard, the metal layer is preferably pure silver. Since the pure silver is easily oxidized and has an unstable refractive index, a silver alloy may be used in a case of forming the layer by sputtering or the like. However, even in this case, it is preferable to make the refractive index as low as possible.

A thickness of the metal layer is not limited, and a thickness at which desired reflection characteristics and transmission characteristics can be obtained may be appropriately set according to the forming material.

Here, as will be described later, in the windshield glass according to the embodiment of the present invention, it is preferable that the metal layer constituting the reflective layer is a semi-transmissive film having a thickness of approximately 10 nm, and it is preferable that this semi-transmissive film is sandwiched between the dielectric layers, particularly dielectric layers having a multi-layer configuration, that is, dielectric multi-layer films.

In consideration of this point, the thickness of the metal layer is preferably 3 to 20 nm.

The thickness of the metal layer affects the absolute value of the reflectivity, and the reflectivity is lowered in a case where the thickness is too small. On the other hand, by setting the thickness of the metal layer to 3 nm or more, a suitable reflectivity of projection light (image light) can be obtained, and thus the visibility of the display image by the head-up display system can be improved.

In addition, in a case where the metal layer is too thick, the metal layer does not transmit light, and thus the effect of the dielectric layer (dielectric multi-layer film) on the side opposite to the light incident side may not be obtained. On the other hand, by setting the thickness of the metal layer to 20 nm or less, the effect of sandwiching the metal layer with the dielectric layers can be suitably obtained, and the reflectivity of P-polarized light incident from an oblique direction can be improved.

The thickness of the metal layer is more preferably 4 to 18 nm and still more preferably 5 to 15 nm.

### <<Dielectric layer>>

As described above, in the windshield glass according to the embodiment of the present invention, the reflective layer has a configuration in which the above-described metal layer is sandwiched between the dielectric layers.

In the present invention, the dielectric layer is not limited, and various layers including known dielectrics can be used. Specific examples of a forming material of the dielectric layer include ZnSnMgOₓ, ZnSnOₓ, ZnO, SnO₂, TiO₂, Si₃N₄, SiO₂, MgF₂, and AlN. Among these, Si₃N₄ or AlN is suitably exemplified.

Here, since the metal layer is a metal, preferably silver and more preferably pure silver, it is preferable that the dielectric layer functions as an oxygen barrier layer as described above.

A method for forming the dielectric layer is not limited, and various known methods such as vapor phase deposition including magnetron sputtering can be used.

Although described later in detail, the dielectric layer may be formed of one layer, but is preferably formed of two or more layers using, for example, the above-described material.

Here, in a case where the dielectric layer is a film containing oxygen, an adjacent layer may be oxidized during the film formation. As described above, the metal layer is easily oxidized. For example, in a case where a metal oxide film is formed by sputtering, the metal layer is exposed to oxygen plasma and thus oxidized.

In a case where the metal layer is oxidized, the refractive index increases, and the visible light transmittance decreases.

In response to this, in the windshield glass according to the embodiment of the present invention, among layers constituting the dielectric layer, a layer adjacent to the metal layer is a layer which is not a metal oxide, that is, a non-metal oxide film such as a nitride film. In the present invention, the metal includes silicon.

Since the windshield glass according to the embodiment of the present invention has such a configuration, the metal layer is not unnecessarily oxidized, so that the refractive index is not decreased, and the visible light transmittance of the reflective layer, that is, the windshield glass is not reduced.

In the present invention, the dielectric layer may be an alternating layer of a layer of high refractive index and a layer of low refractive index, having a thickness of 1 to 300 nm, as described later, and a phase can be controlled by adjusting the film thickness and the refractive index, and the transmittance and the reflectivity can be controlled.

In the present invention, the metal layer and the dielectric layer are configured such that an unpolarized light reflectivity at an incidence angle of 0° with respect to the windshield glass is reduced and the P-polarized light reflectivity at an incidence angle of 65° is increased.

Hereinafter, the details will be described.

As described above, in the head-up display system, the display image (projection image) is displayed to the user by reflecting the projection light (image light) emitted by the projector by a reflective layer such as a half mirror, provided on the windshield glass. In the following description, the head-up display (HUD) system is also referred to as "HUD".

Here, the windshield glass, particularly the windshield glass for vehicles, is required to have a high visible light transmittance in order to ensure visibility outside the vehicle. On the other hand, in the HUD, in order to improve the visibility of the display image, a certain degree of reflectivity of the projection light is required for the reflective layer (combiner).

In the HUD, the projection light from the projector is usually obliquely incident on the windshield glass (reflective layer). As will be described later, the angle (incidence angle) is preferably 45° to 70° with respect to the normal line of the windshield glass, that is, close to the Brewster's angle.

In addition, in order to reduce a double image caused by the reflection of the projection light by the outer glass plate and the inner glass plate, it is preferable that the projection light emitted by the projector is P-polarized light rather than S-polarized light having a high reflectivity.

That is, it is preferable that the windshield glass (reflective layer) constituting the HUD has a high visible light transmittance with respect to light incident from the front, that is, light at an incidence angle of 0°, and has a high reflectivity of P-polarized light, which originally has a lower reflectivity than S-polarized light, with respect to obliquely incident light.

Here, the refractive index of the metal layer is represented by a complex refractive index n-ik (k is an attenuation coefficient), and includes an imaginary part. As a result, the reflection is also a complex number, and thus a phase of interface reflection between the dielectric layer and the metal layer deviates from 0° and 180°.

In addition, aluminum, silver, or the like has a refractive index of n < 1, which is extremely low as compared with a general dielectric layer. By utilizing this characteristic, in a case where the phase is controlled by the film thickness and the refractive index of each layer, the P-polarized light reflection can be made higher than the S-polarized light reflection with respect to the obliquely incident light.

In particular, in a case where the layers are configured as follows, the reflectivity of P-polarized light is higher than the reflectivity of S-polarized light at an incident angle of 65°;
· the metal layer is formed as the semi-transmissive film having a thickness of approximately 10 nm, and sandwiched between the dielectric multi-layer films;
· a dielectric multi-layer film on the light incident side is configured as an antireflection film at an incidence angle of 65°, considering a substrate of the metal layer; and
· a dielectric multi-layer film on the side opposite to the light incident side is configured as an enhanced reflection film at an incidence angle of 65°, considering the substrate of the metal layer.

In this case, as the refractive index of the metal layer is lower, the effect of antireflection can be increased, and thus the transmittance can be increased. Since there is a legal regulation on a transmittance of 70% or more for the windshield glass for vehicles, the reflectivity can be efficiently increased under the transmittance regulation.

In the present invention, the antireflection film refers to a film having characteristics in which S-polarized light reflection at an incidence angle of 65° is 10% or less with respect to a substrate obtained by coating a glass substrate (having no back surface reflection) with the metal layer to a thickness of 15 nm.

In the antireflection film, it is preferable that the film thickness is designed such that a phase of the incidence light and a phase of the interference reflected light of the dielectric multi-layer film at an incidence angle of 65° are shifted from each other to weaken the interference light of S-polarization.

For example, an optical path length of the dielectric multi-layer film (sum of n × d of each layer) is set to approximately 100 nm ± 20 nm with n representing the refractive index and d representing the film thickness.

For example, in a case where the antireflection film is formed of two layers of SiN layer/SiO₂ layer on the metal layer, a configuration in which the SiN layer has a thickness of 40 nm and the SiO₂ layer has a thickness of 10 nm (the sum of n × d is 96 nm), and a configuration in which the SiN layer has a thickness of 15 nm and the SiO₂ layer has a thickness of 55 nm (the sum of n × d is 112 nm) are exemplified as a suitable design.

In a case where the antireflection film is formed of three layers of SiN layer/SiO₂ layer/SiN layer on the metal layer, a configuration in which the SiN layer has a thickness of 7 nm, the SiO₂ layer has a thickness of 47 nm, and the SiN layer has a thickness of 9 nm (the sum of n × d is 102 nm), and a configuration in which the SiN layer has a thickness of 15 nm, the SiO₂ layer has a thickness of 20 nm, and the SiN layer has a thickness of 20 nm (the sum of n × d is 100 nm) are exemplified as a suitable design.

The combination changes depending on the number of layers and the refractive index, but similarly, a design in which the interference of the antireflection film is weakened is applied.

In addition, in the present invention, the enhanced reflection film refers to a film having characteristics in which P-polarized light reflection at an incidence angle of 65° is 20% or more with respect to a substrate obtained by coating a glass substrate (having no back surface reflection) with the metal layer to a thickness of 15 nm.

In the enhanced reflection film, it is preferable that the film thickness is designed such that a phase of the incidence light and a phase of the interference reflected light of the dielectric multi-layer film at an incidence angle of 65° are shifted from each other to enhance the interference light of P-polarization.

For example, an optical path length of the dielectric multi-layer film (sum of n × d of each layer) is set to approximately 100 × A nm ± 30 nm (A = 1, 2, 3, 4, ..., an integer multiple) with n representing the refractive index and d representing the film thickness. In Examples described later, the sum of n × d is 420 nm.

In a case where A = 1, the same conditions as in the above-described configuration of the antireflection film can be used in the enhanced reflection film. However, in a case where A = 2 or more, the total sum of n × d of each layer is too high, and thus the tint is deteriorated, which makes it difficult to use as the antireflection film.

In addition, in the windshield according to the embodiment of the present invention, the reflectivity of P-polarized light may be higher than that of S-polarized light by controlling a magnetic field.

For example, by actively changing the magnetic field (ik portion of the complex refractive index) such as forming a coil with silver, a vibration direction of electrons at the interface incidence can be adjusted, and a state in which the reflectivity of S-polarized light is reduced and the reflectivity of P-polarized light is increased toward the Brewster's angle can be created.

In the windshield glass according to the embodiment of the present invention, the reflective layer, that is, the metal layer and the dielectric layers sandwiching the metal layer are designed based on such a technical idea, whereby a HUD having a high visible light transmittance, a high reflectivity of obliquely incident P-polarized light, and a high brightness, that is, visibility of a display image is achieved.

In the reflective layer of the windshield glass according to the embodiment of the present invention, the dielectric layers which sandwich the metal layer may be composed of one layer. However, in the present invention, it is preferable that the dielectric layer is composed of a plurality of layers, for example, a three-layer configuration such as Si₃N₄/SiO₂/Si₃N₄. That is, as described above, in the windshield glass according to the embodiment of the present invention, it is preferable that the dielectric layer forming the reflective layer is a dielectric multi-layer film.

However, in the present invention, in a case where the dielectric layer is composed of a plurality of layers, the layer adjacent to the metal layer is a layer containing no oxygen, as described above.

In this case, the number of layers constituting the dielectric layer is not limited, and the dielectric layer may have a two-layer configuration, the above-described three-layer configuration, or a four-layer or more configuration. According to the study by the present inventors, the dielectric layer preferably has a configuration of 5 to 10 layers.

In a case where the dielectric layer has a multi-layer configuration, it is preferable that the dielectric layer on the light incident side, that is, the dielectric layer 42 on the side of the inner glass plate 2 opposite to the metal layer 5 in Fig. 1 acts as the above-described antireflection film of the metal layer as a laminate of a layer of high refractive index and a layer of low refractive index.

In addition, in a case where the dielectric layer has a multi-layer configuration, it is preferable that the dielectric layer on the side opposite to the light incident side, that is, the dielectric layer 41 on the inner glass plate 2 side of the metal layer 5 in Fig. 1 acts as the above-described enhanced reflection film of the metal layer as a laminate of a layer of high refractive index and a layer of low refractive index.

Furthermore, in a case where the dielectric layer is the laminate of a layer of high refractive index and a layer of low refractive index, it is preferable that a thickness of the layer of high refractive index is larger than a thickness of the layer of low refractive index in both the dielectric layer on the light incident side and the dielectric layer on the side opposite to the light incident side.

In this case, the layer of high refractive index is a layer having a refractive index of 1.8 or more. On the other hand, the layer of low refractive index is a layer having a refractive index of 1.5 or less.

In a case where the dielectric layer has a multi-layer configuration, the number of layers of the dielectric layer on the light incident side and the number of layers of the dielectric layer on the side opposite to the light incident side may be the same or different from each other.

In addition, in a case where the dielectric layer is a single layer and in a case where the dielectric layer has a multi-layer configuration, the forming material of the dielectric layer on the light incident side and the forming material of the dielectric layer on the side opposite to the light incident side may be the same or different from each other.

However, from the viewpoint that the P-polarized light reflectivity at an incidence angle of 65° can be improved, the film formation can be efficiently carried out continuously in the same film formation apparatus, the adverse effect due to the mixing of other materials is less likely to occur, and the like, it is preferable that the dielectric layer on the light incident side and the dielectric layer on the side opposite to the light incident side have the same forming material.

Furthermore, in a case where the dielectric layer has a multi-layer configuration, it is preferable that the dielectric layer on the light incident side and the dielectric layer on the side opposite to the light incident side have the same number of layers and the same forming material, and the layer configuration is symmetric with the metal layer at the center.

With such a configuration, since the dielectric layer is often provided with the layer of high refractive index and the layer of low refractive index alternately, the above-described layer order is preferable from the viewpoint that interference is more efficiently controlled and the P-polarized light reflectivity at an incidence angle of 65° can be improved even in a case where the number of layers is small.

In the reflective layer of the windshield glass according to the embodiment of the present invention, a thickness of the dielectric layer on the light incident side and a thickness of the dielectric layer on the side opposite to the light incident side may be the same or different from each other.

However, it is preferable that the thickness of the dielectric layer on the side opposite to the light incident side is larger than the thickness of the dielectric layer on the light incident side. In particular, in a case where the dielectric layer has a multi-layer configuration, it is preferable that the thickness of the dielectric layer on the side opposite to the light incident side is larger than the thickness of the dielectric layer on the light incident side.

Furthermore, in a case where the dielectric layer has a multi-layer configuration, it is preferable that the dielectric layer on the light incident side and the dielectric layer on the side opposite to the light incident side have the same number of layers and the same forming material, the layer configuration is symmetric with the metal layer at the center, and the film thickness of all the layers is such that the dielectric layer on the side opposite to the light incident side is equal to or thicker than the dielectric layer on the light incident side in each corresponding layer, and the thickness of the dielectric layer on the side opposite to the light incident side is higher than the thickness of the dielectric layer on the light incident side.

Such a configuration is preferable from the viewpoint that the P-polarized light reflectivity at an incidence angle of 65° can be improved, the tint of exterior can be made achromatic (neutral), and the like.

In addition, the optical path length of the dielectric layer (dielectric multi-layer film) is not limited, and may be appropriately set depending on the forming material of the dielectric layer, and the like.

Specifically, in a case where n represents the refractive index and d represents the film thickness, the optical path length of the dielectric layer (sum of n × d of each layer) is preferably 80 to 120 nm and more preferably 90 × 110 nm in the dielectric layer on the light incident side.

In addition, the optical path length of the dielectric layer (sum of n × d of each layer) is preferably 70 to 130 nm, 170 to 230 nm, 270 to 330 nm, or 370 to 430 nm, and more preferably 80 to 120 nm, 180 to 220 nm, 280 to 320 nm, or 380 to 420 nm in the dielectric layer on the side opposite to the light incident side.

### <Outer glass plate and inner glass plate>

The windshield glass according to the embodiment of the present invention includes an outer glass plate and an inner glass plate. That is, the windshield glass according to the embodiment of the present invention is a laminated glass.

In the windshield glass according to the embodiment of the present invention, in order to efficiently use the reflection of the air interface, the reflective layer is provided on the surface of the inner glass plate opposite to the outer glass plate.

As a glass plate such as the inner glass plate and the outer glass plate, a glass plate generally used in the windshield glass can be used. For example, a glass plate having a visible light transmittance of 80% or less, for example, 73%, 76%, or the like, such as green glass having high heat shielding properties, may be used. Even in a case where a glass plate having a low visible light transmittance is used as described above, since the windshield glass according to the embodiment of the present invention includes the above-described reflective layer, it is possible to obtain a windshield glass having a visible light transmittance of 70% or more even at the position of the reflective layer.

In the windshield glass according to the embodiment of the present invention, forming materials of the inner glass plate and the outer glass plate may be the same or different from each other.

In addition, in the present invention, it is preferable that at least one of the inner glass plate or the outer glass plate is green glass, and it is more preferable that both are green glass.

In the following description, in a case where it is not necessary to distinguish between the inner glass plate and the outer glass plate, both are collectively and simply referred to as "glass plate".

A thickness of the glass plate is not particularly limited, but is approximately 0.5 to 5.0 mm, preferably 1.0 to 3.0 mm and more preferably 2.0 to 2.3 mm.

The thicknesses of the outer glass plate and the inner glass plate may be the same or different from each other.

The windshield glass including the laminated glass configuration can be manufactured by using a known manufacturing method of a laminated glass.

In general, the windshield glass can be manufactured by a method of sandwiching the interlayer film for a laminated glass between two glass plates, repeatedly performing a heating treatment and a pressurizing treatment (treatment using rubber rollers, or the like) several times, and finally performing a heating treatment under a pressurizing condition using an autoclave.

### <Interlayer film>

In the windshield glass according to the embodiment of the present invention, the interlayer film is disposed between the outer glass plate and the inner glass plate.

The interlayer film prevents the glass plate from being broken and scattering in a vehicle in the event of an accident.

As the interlayer film (interlayer film sheet), any known interlayer film used as an interlayer film in the laminated glass can be used.

As the interlayer film, for example, a resin film containing a resin selected from the group consisting of polyvinyl butyral (PVB), an ethylene-vinyl acetate copolymer, and a chlorine-containing resin can be used. The above-described resin is preferably a main component of the interlayer film. The main component refers to a component occupying 50% by mass or more of the interlayer film.

In the interlayer film, among the above-described resins, polyvinyl butyral or an ethylene-vinyl acetate copolymer is preferable, and polyvinyl butyral is more preferable. The resin is preferably a synthetic resin.

The polyvinyl butyral can be obtained by acetalization of polyvinyl alcohol with butyl aldehyde. A preferred lower limit of a degree of the acetalization of polyvinyl butyral is 40% and a preferred upper limit thereof is 85%; and a more preferred lower limit thereof is 60% and a more preferred upper limit thereof is 75%.

The polyvinyl alcohol is normally obtained by saponification of polyvinyl acetate, and polyvinyl alcohol having a degree of saponification of 80 to 99.8 mol% is generally used.

In addition, a preferred lower limit of a degree of the polymerization of polyvinyl alcohol is 200, and a preferred upper limit thereof is 3,000. In a case where the degree of the polymerization of polyvinyl alcohol is 200 or more, penetration resistance of the obtained laminated glass is unlikely to be lowered; and in a case of being 3,000 or less, the resin film has good moldability and the rigidity of the resin film does not become too large. Therefore, a favorable workability is achieved. A more preferred lower limit thereof is 500 and a more preferred upper limit thereof is 2,000.

In addition, a thickness of the interlayer film is not limited, and a thickness at which desired performance can be exhibited may be set in the same manner as the interlayer film of a known windshield glass, depending on the forming material and the like.

Next, the head-up display system (HUD) according to the embodiment of the present invention will be described.

The HUD according to the embodiment of the present invention is a head-up display system including the above-described windshield glass according to the embodiment of the present invention and a projector which emits projection light (image light) to the inner glass plate side of the windshield glass.

Fig. 2 conceptually shows an example of the HUD according to the embodiment of the present invention.

A HUD 20 shown in Fig. 2 includes the windshield glass according to the embodiment of the present invention, including the windshield glass body 10 and the reflective layer 6, and a projector 7. In the windshield glass according to the embodiment of the present invention, as described above, the reflective layer 6 includes the dielectric layer 42 on the light incident side, the dielectric layer 41 on the side opposite to the light incident side, and the metal layer 5 sandwiched therebetween.

The HUD 20 is used in a vehicle such as a passenger car.

In the HUD according to the embodiment of the present invention, the projection light emitted by the projector is not limited, and projection light used in the known HUD can be used.

Accordingly, as long as it is visible light, the projection light emitted by the projector may be monochromatic light such as red light, green light, and blue light, may be two-color light such as red light and blue light, or may be projection light corresponding to a full color image including red light, green light, and blue light. In addition, the projection light emitted by the projector may be polarized light or unpolarized light, but is preferably polarized light and more preferably P-polarized light.

In the HUD 20 of the example shown in the drawing, as a preferred aspect, the projector 7 emits P-polarized projection light to the windshield glass.

By setting the projection light emitted by the projector 7 to the windshield glass to P-polarized light, the reflection of the projection light by the outer glass plate 1 and the inner glass plate 2 of the windshield glass is significantly reduced, and the inconvenience such as the observation of the double image can be suppressed.

The projector 7 preferably emits the P-polarized projection light to the windshield at the Brewster's angle. As a result, the reflection of the projection light by the outer glass plate 1 and the inner glass plate 2 is eliminated, which allows display of a clearer screen image.

### <Projector>

The "projector" is "device projecting light or a screen image", includes "device projecting a drawn screen image", and emits projection light carrying and supporting a screen image to be displayed. As described above, in the HUD 20 of the example shown in the drawing, the projector 7 emits P-polarized projection light.

In the HUD 20, the projector 7 may be disposed such that the P-polarized projection light which carries the screen image to be displayed can be incident on the reflective layer 6 of the windshield glass at an oblique incidence angle.

In the HUD 20, it is preferable that the projector 7 includes a drawing device, and reflects and displays a screen image (real image) drawn on a small intermediate image screen as a virtual image by a combiner.

A known projector used for the HUD can be used as the projector. In addition, in the projector, an imaging distance of the virtual image, that is, a virtual image formation position is preferably variable.

Examples of a method of changing the imaging distance of the virtual image in the projector include a method in which a surface on which a screen image is generated (screen) is moved (refer to JP2017-21302A); a method in which a plurality of optical paths having different optical path lengths are changed (refer to WO2015/190157A); a method in which an optical path length is changed by inserting and/or moving mirrors; a method in which a focal length is changed by using an assembled lens as an imaging lens; a method in which the projector is moved; a method in which a plurality of projectors having different imaging distances of virtual images are changed and used; and a method in which a variable-focal-length lens is used (refer to WO2010/116912A).

The projector may be a projector in which the imaging distance of the virtual image is continuously changeable or a projector in which the imaging distance of the virtual image can be changed at two or three or more points.

Here, it is preferable that, among the virtual images of the projection light by the projector, at least two virtual images have different imaging distances of 1 m or more. Therefore, in a case where the imaging distance of the virtual image can be continuously changed by the projector, the imaging distance of the virtual image is preferably changeable by 1 m or more. Such a projector is preferably used because the projector can suitably handle a case where the distance of line of sight of the driver is considerably different between a normal speed run on the general road and a high speed run on the expressway.

### (Drawing device)

The drawing device may itself be a device displaying the screen image or a device emitting light capable of drawing the screen image.

The drawing device means a device including a light source, and further including an optical modulator, a laser brightness modulation unit, and a pulse modulation unit, which are provided according to a drawing method, and an optical deflection unit for drawing or the like as necessary.

The drawing device may be adjusted by a known drawing method in which light from the light source is modulated according to the display image by the optical modulator, the laser brightness modulation unit, the pulse modulation unit, and the like, and is scanned by the optical deflection unit for drawing or the like as necessary.

The light source is not limited, and known light sources used in a projector, a drawing device, a display, and the like, such as a light emitting diode (LED), an organic light emitting diode (OLED), a discharge tube, and a laser light source, can be used.

Among these, the LED or the discharge tube is preferable because they are suitable for a light source of a drawing device which emits linearly polarized light, and the LED is particularly preferable. As a luminescence wavelength is not continuous in the visible light range, the LED is suitable for combination with a combiner in which a cholesteric liquid crystal layer exhibiting selective reflection in a specific wavelength range is used as described later.

The light source may be, for example, a self-luminous image display device such as an organic electro-luminescence (EL) display (OLED display). In this case, the light source itself serves as the drawing device.

### (Drawing method)

The drawing method can be selected according to the light source to be used, and the like, and is not particularly limited.

Examples of the drawing method include a fluorescent display tube, a liquid crystal display (LCD) method or a liquid crystal on silicon (LCOS) method using a liquid crystal, Digital Light Processing (DLP) (registered trademark) method, and a scanning method using a laser. The drawing method may be a method using a fluorescent display tube integrated with the light source. The LCD method is preferable as the drawing method.

With regard to the LCD method and the LCOS method, by modulating (turning on/off) each liquid crystal cell of a liquid crystal display element (liquid crystal panel) in which liquid crystal cells are two-dimensionally arranged according to a display image, a screen image corresponding to the display image is displayed on the liquid crystal display element by light emitted from a light source. The screen image displayed by the liquid crystal display element is emitted as projection light through a projection lens.

The DLP method is a display system using a digital micromirror device (DMD). With regard to the DLP method, in the DMD, the reflection of light is turned on/off by changing an angle of micromirrors two-dimensionally arranged according to the display image, and the light emitted from the light source is modulated and reflected according to the display image to perform the drawing. The light reflected by the DMD is emitted as projection light through a projection lens.

The scanning method is a method of two-dimensionally scanning a screen with a beam by modulating and deflecting the beam such as laser light emitted from a light source according to the display image, and imaging using an afterimage of the eye. For example, the description in JP1995-270711A (JP-H07-270711A) and JP2013-228674A can be referred to for the scanning method.

In the scanning method using a laser, laser light of each color of, for example, red light, green light, and blue light, which is brightness-modulated or pulse-modulated, is bundled into one beam by a multiplexing optical system, a condenser lens, or the like; and the beam is two-dimensionally scanned by a light deflection unit and drawn on an intermediate image screen described later.

In the scanning method, for example, the brightness modulation and pulse modulation of laser light of each color of red light, green light, and blue light may be directly performed by modulating a light source, or may be performed by an external modulator. Examples of the optical deflection unit include a galvanometer mirror, a combination of a galvanometer mirror and a polygon mirror, and a micro electro mechanical system (MEMS); and among these, MEMS is preferable. The scanning method includes a random scan method, a raster scan method, or the like, and a raster scan method is preferable. In the raster scan method, the laser light can be driven, for example, with a resonance frequency in a horizontal direction and with a saw-tooth wave in a vertical direction. Since the scanning method does not require the projection lens, it is easy to miniaturize the device.

The emitted light from the drawing device may be linearly polarized light or natural light (non-polarized light).

In a drawing device using a drawing method of the LCD method or the LCOS method and a drawing device using the laser light source, irradiation light is essentially linearly polarized light. In a case where a drawing device in which the irradiation light is linearly polarized light and the emitted light includes light beams having a plurality of wavelengths (colors), polarization directions (transmission axis directions) of the light in a plurality of wavelengths are preferably the same as each other. As commercially available drawing devices, a device having non-uniform polarization directions in wavelength ranges of red light, green light, and blue light included in the emitted light has been known (refer to JP2000-221449A). Specifically, as an example, a polarization direction of green light is orthogonal to a polarization direction of red light and a polarization direction of blue light is known.

As described above, in the HUD according to the embodiment of the present invention, the projection light emitted by the projector is preferably P-polarized light.

### (Intermediate image screen)

As described above, the drawing device may use an intermediate image screen. The "intermediate image screen" is a screen on which the screen image is drawn. That is, in a case where light emitted from the drawing device is not yet visible as the screen image, the drawing device forms a screen image visible on the intermediate image screen using the light.

The screen image drawn on the intermediate image screen may be projected on the combiner by light transmitted through the intermediate image screen, or may be reflected on the intermediate image screen and projected on the combiner.

Examples of the intermediate image screen include a scattering film, a microlens array, and a screen for rear projection.

In a case where a plastic material is used as the intermediate image screen, assuming that the intermediate image screen has birefringence, a polarization plane and a light intensity of the polarized light incident on the intermediate image screen are in disorder, and color unevenness or the like is likely to occur in the combiner (reflective layer). However, by using a phase difference film having a predetermined phase difference, the problem of occurrence of color unevenness can be reduced.

It is preferable that the intermediate image screen has a function of spreading and transmitting incident ray. This is because an enlarged projection image can be displayed. Examples of the intermediate image screen include a screen composed of a microlens array. The microarray lens used in the HUD is described in, for example, JP2012-226303A, JP2010-145745A, JP2007-523369A, and the like.

The projector may include a reflecting mirror which adjusts an optical path of the projection light formed by the drawing device.

The windshield glass according to the embodiment of the present invention is particularly useful for a HUD used in combination with a projector using a laser, an LED, an OLED, or the like, which has a light emission wavelength that is not continuous in a visible light region as a light source. This is because the reflective layer, that is, the metal layer and the dielectric layer can be adjusted according to each emission wavelength.

In addition, the windshield glass can also be used for projection of a display such as a liquid crystal display device (LCD) in which display light is polarized light.

### [Projection light]

As shown in Fig. 2, the projection light emitted by the projector is incident on the reflective layer 6 of the windshield glass at a predetermined incidence angle θ, is reflected, and is observed as a display image (projection image) by the driver E. In the HUD, the driver observes the virtual image of the projection image projected onto the windshield glass as described above.

It is preferable that the projection light emitted by the projector is incident at an oblique incidence angle of 45° to 70° with respect to the normal line of the windshield glass (reflective layer) indicated by a broken line in the drawing. That is, it is preferable that the projection light emitted by the projector is incident on the windshield glass such that the incidence angle θ is 45° to 70°.

The Brewster's angle of an interface between glass having a refractive index of approximately 1.51 and air having a refractive index of 1 is approximately 56°. Accordingly, by allowing the P-polarized light to be incident within the above-described range of the incidence angle θ, a screen image display in which the reflected light from the surface of the inner glass plate is small and the influence of the double image is small can be performed.

The incidence angle θ is also preferably 50° to 65°. In this case, it is sufficient that the observation of the projection image by the driver E can be performed at an angle of 45° to 70°, preferably 50° to 65° on a side opposite to the incidence ray with respect to the normal line of the windshield glass indicated by the broken line on the incidence side of the projection light.

The incidence ray may be incident from any direction of upwards, downwards, rightwards, and leftwards of the windshield glass, and may be determined in accordance with a visible direction. For example, the incidence ray is preferably incident at an obliquely incidence angle from the bottom during use.

In addition, it is preferable that the windshield glass (reflective layer) is disposed to reflect incident P-polarized light.

As described above, in the HUD according to the embodiment of the present invention, it is preferable that the projection light incident on the windshield glass (reflective layer) is P-polarized light which vibrates in a direction parallel to the incident surface.

In a case where the light emitted by the projector is not linearly polarized light, the light may be converted into P-polarized light by providing a linearly polarized light film (polarizer) on the light emitting side of the projector, or the light may be converted into P-polarized light by a known method of using the linearly polarized light film or the like on an optical path between the projector and the windshield glass. In this case, it is considered that a member converting projection light which is not linearly polarized light into P-polarized light is also included in the projector of the HUD according to the embodiment of the present invention.

As described above, in the projector in which a polarization direction is not uniform in the wavelength ranges of red light, green light, and blue light of the emitted light, the polarization direction is preferably adjusted in a wavelength selective manner, and light is incident in all color wavelength ranges as P-polarized light.

As described above, the HUD (projector) may be a projection system in which a virtual image formation position is variable. A variable image formation position of the virtual image enables the driver to visually confirm the virtual image more comfortably and conveniently.

The virtual image formation position is a position at which the driver of the vehicle can visually confirm the virtual image, and for example, typically, a position positioned 1,000 mm or more away from the front of the windshield glass as seen by the driver.

The present invention is basically configured as described above. Although the windshield glass and the head-up display system (HUD) according to the embodiments of the present invention have been described in detail above, the present invention is not limited to the above-described embodiments, and various improvements and modifications may be made without departing from the spirit of the present invention.

### Examples

Hereinafter, the characteristics of the present invention will be described in detail by Examples.

The materials, reagents, amounts and proportions of substances, operations, and the like described in Examples can be appropriately modified as long as the gist of the present invention is maintained. Therefore, the scope of the present invention is not limited to Examples shown below.

### <Production of windshield glass>

A windshield glass on which a reflective layer was formed was produced as follows.

### (Formation of reflective layer)

A float glass (manufactured by Central Glass Co., Ltd., FL2, visible light transmittance: 90%) having a thickness of 2 mm was used as an inner glass plate, and a reflective layer consisting of dielectric layers and a metal layer was formed on the inner glass plate by magnetron sputtering. The dielectric layers and the metal layer (silver layer (Ag layer)) were formed on the inner glass plate as shown in the structure of Table 1.

**[Table 1]**

| Configuration of reflective layer right is light incident side | Reflective index of Ag layer | Oxygen barrier of adjacent layer to Ag layer cm3/(m2·day·atm) | Area comparison between Ag layer and adjacent layer to Ag layer |
|---|---|---|---|
| Inner glass plate/Si₃N₄ 9nm/SiO₂ 199nm/Si₃N₄ 54nm /Ag 14nm/Si₃N₄ 7nmx/SiO₂ 47nm/Si₃N₄ 9nm | 0.05 | 0.01 | Ag layer is smaller |
| Inner glass plate/Si₃N₄ 9nm/SiO₂ 199nm/Si₃N₄ 54nm /Ag 12nm/Si₃N₄ 7nm/SiO, 47nm/Si₃N₄ 9nm | 0.05 | 0.01 | Ag layer is smaller |
| Inner glass plate/Si₃N₄ 9nm/SiO₂ 199nm/Si₃N₄ 54nm /Ag 14nm/Si₃N₄ 3nm/SiO₂ 47nm/Si₃N₄ 9nm | 0.1 | 0.1 | Ag layer is smaller |
| Inner glass plate/ZnSnOx 26nm/ZnO 10nm/Ag 10nm/ Ti Inm/ZnO 9nm/ZnSnOx 39nm | 0.2 | 1 | Same |

In the table, the reflective layers correspond to the windshield glasses of Example 1, Example 2, and Example 3 in order from the uppermost row; and the lowermost row corresponds to the windshield glass of Comparative Example 1.

A refractive index of the silver layer was estimated by fitting with an ellipsometer. In Example 1 and Example 2, since the layer adjacent to the silver layer, that is, the metal layer was a nitride layer (Si₃N₄ layer), oxygen barrier performance was high, and the silver layer was not oxidized, so that a low refractive index was obtained.

In Example 3, the barrier performance was slightly deteriorated because the nitride layer adjacent to the silver layer was thin, and the silver layer was slightly oxidized, so that the refractive index was slightly increased.

In Comparative Example 1, the layer adjacent to the silver layer was an oxide layer, so that the refractive index was increased by exposing the silver layer to oxygen plasma during the sputtering. In addition, in Comparative Example 1, since the area of the silver layer was the same as the area of the adjacent layer, the fact that oxygen easily penetrated from the end part of the silver layer was also one of the factors that the refractive index was high.

The oxygen barrier (oxygen permeability) of the film adjacent to the silver layer is a value obtained by forming the film adjacent to the silver layer on the plastic substrate and measuring the oxygen barrier performance as described above.

After the formation of the films on the inner glass plate, that is, the formation of the reflective layer was completed, an interlayer film was sandwiched between the inner glass plate and an outer glass plate to produce a laminate.

As the outer glass plate, a float glass (manufactured by Central Glass Co., Ltd., FL2, visible light transmittance: 90%) having a thickness of 2 mm was used. In addition, as the interlayer film, a PVB film (manufactured by SEKISUI CHEMICAL CO., LTD.) having a thickness of 0.76 mm was used as the intermediate film.

The laminate was held at 90°C and 10 kPa (0.1 atm) for 1 hour, and then heated in an autoclave (manufactured by Kurihara Seisakusho, K.K.) at 115°C and 1.3 MPa (13 atm) for 20 minutes to remove air bubbles, thereby obtaining a laminated glass.

In this manner, windshield glasses of Examples 1 to 3 and Comparative Example 1, in which the interlayer film was provided between the outer glass plate and the inner glass plate and the reflective layer was provided on the surface of the inner glass plate opposite to the outer glass plate, were produced.

### [Measurement of visible light transmittance]

From the outer glass plate side, natural light was incident from a direction of 0° (incidence angle: 0°) with respect to the normal direction of the outer glass plate, and a transmittance spectrum was measured with a spectrophotometer (V-670, manufactured by JASCO Corporation). According to JIS R 3106, the transmittance was calculated by multiplying the transmittance by each of a coefficient based on luminosity factor and an emission spectrum of an A light source in a wavelength range of 380 to 780 nm at intervals of 10 nm.

### [Measurement of P-polarized light reflectivity]

From the inner glass plate side, P-polarized light was incident from a direction of 65° (incidence angle: 65°) with respect to the normal direction of the inner glass plate. For the specular reflection of the incident P-polarized light, a reflectance spectrum was measured with a spectrophotometer (V-670, manufactured by JASCO Corporation). In this case, a long side direction (vertical direction) of the reflective layer was made to be parallel to a transmission axis of the P-polarized light incident into the spectrophotometer. The specular reflection of

the P-polarized light was light reflected in a direction of 65° with respect to the normal direction on a side opposite to the incident direction with respect to the normal direction in the incident surface.

According to JIS R 3106, the reflectivity of the projection image was calculated by multiplying the reflectivity by each of a coefficient based on luminosity factor and an emission spectrum of a D65 light source in a wavelength range of 380 to 780 nm at intervals of 10 nm.

The results are shown in the following table.

**[Table 2]**

| | Measurement | |
|---|---|---|
| | Visible light transmittance | P-polarized light reflectivity |
| Example 1 | 80% | 31% |
| Example 2 | 82% | 27% |
| Example 3 | 84% | 26% |
| Comparative Example 1 | 80% | 15% |

For the windshield glass of each of Examples and Comparative Examples, the transmittance and the brightness were evaluated according to the following standards by changing the outer glass plate and the inner glass plate from the float glass to green glass.

### Evaluation Standard for Transmittance

A: in a case where the laminated glass was formed with green glass, the transmittance was sufficiently more than 72%.
B: in a case where the laminated glass was formed with green glass, the transmittance was more than 70%.
C: in a case where laminated glass was formed with green glass, the transmittance was less than 70%.

### Evaluation Standard for Brightness (P-polarized light reflectivity)

The HUD display image was observed with a daytime road with a windshield incorporated as a background. In the HUD display image, characters were displayed in white, green, and red.
A+: fine white, green, and red characters were clearly readable.
A: white, green, and red characters were clearly readable.
B: white and green characters were readable, but it took time to read fine red characters.
C: white and green characters were readable, but red characters were not readable in some cases.
D: white and green characters were readable, but red characters were not readable.

The results are shown in the following table.

**[Table 3]**

| | Evaluation | |
|---|---|---|
| | Visible light transmittance | P-polarized light reflectivity |
| Example 1 | B | B |
| Example 2 | A | B |
| Example 3 | A | B |
| Comparative Example 1 | B | D |

As shown in Table 3, it was found that, in Examples of the present invention, a good result was obtained in terms of the P-polarized light reflectivity (brightness) as compared with Comparative Examples.

From the above results, the effect of the present invention is clear.

The present invention can be suitably used for an in-vehicle head-up display system (HUD) or the like.

### Explanation of References

1: outer glass plate
2: inner glass plate
3: interlayer film
41, 42: dielectric layer
5: metal layer
6: reflective layer
7: projector
10: windshield glass body
20: head-up display system (HUD)

## Claims

1. A windshield glass comprising, in the following order:
an outer glass plate;
an interlayer film; and
an inner glass plate,
wherein a reflective layer in which a metal layer is sandwiched between dielectric layers is provided on a surface of the inner glass plate opposite to the outer glass plate, and
all of the following requirements (A) to (D) are satisfied,
(A) a P-polarized light reflectivity at an incidence angle of 65° is 26% or more,
(B) a transmittance at an incidence angle of 0° is 70% or more,
(C) a refractive index of the metal layer is 0.1 or less, and
(D) in the dielectric layer, a layer in contact with the metal layer is not a metal oxide.

2. The windshield glass according to claim 1,
wherein the dielectric layer consists of two or more layers.

3. The windshield glass according to claim 1,
wherein the refractive index of the metal layer is 0.05 or less.

4. The windshield glass according to claim 1,
wherein the metal layer contains silver.

5. The windshield glass according to claim 1,
wherein, in the dielectric layer, the layer in contact with the metal layer has oxygen barrier properties, and an oxygen permeability of the layer is 0.1 cm³/(m²·day·atm).

6. The windshield glass according to claim 1,
wherein at least one of the inner glass plate or the outer glass plate is green glass.

7. The windshield glass according to claim 1,
wherein, in the dielectric layer, the layer in contact with the metal layer has a larger area than the metal layer and covers an entire surface of the metal layer.

8. A head-up display system comprising:
the windshield glass according to any one of claims 1 to 7; and
a projector which emits projection light to the inner glass plate side of the windshield glass.

9. The head-up display system according to claim 8,
wherein the projector emits P-polarized projection light.
